(19) Europäisches Patentamt / European Patent Office / Office européen des brevets

(11) **EP 4 723 243 A1**

(12) **EUROPEAN PATENT APPLICATION**
published in accordance with Art. 153(4) EPC

(43) Date of publication:
08.04.2026 Bulletin 2026/15

(21) Application number: 24876399.7

(22) Date of filing: 25.09.2024

(51) International Patent Classification (IPC):
$H01M\ 4/62$ (2006.01)   $H01M\ 4/505$ (2010.01)
$H01M\ 4/525$ (2010.01)   $H01M\ 4/131$ (2010.01)
$H01M\ 10/054$ (2010.01)

(52) Cooperative Patent Classification (CPC):
Y02E 60/10

(86) International application number:
PCT/CN2024/121225

(87) International publication number:
WO 2025/077581 (17.04.2025 Gazette 2025/16)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 09.10.2023 CN 202311296382

(71) Applicant: Ningbo Ronbay New Energy
Technology Co., Ltd.
Yuyao Ningbo, Zhejiang 315402 (CN)

(72) Inventors:
• LU, Cheng
  Ningbo, Zhejiang 315402 (CN)
• XIE, Longquan
  Ningbo, Zhejiang 315402 (CN)
• SHE, Xiao
  Ningbo, Zhejiang 315402 (CN)

(74) Representative: Bandpay & Greuter
11, rue Christophe Colomb
75008 Paris (FR)

(54) **POSITIVE ELECTRODE ACTIVE MATERIAL AND PREPARATION METHOD THEREFOR, POSITIVE ELECTRODE PLATE, BATTERY, AND ELECTRICAL APPARATUS**

(57)    A positive electrode active material and a preparation method thereof, a positive electrode sheet, a battery and an electrical apparatus, where a chemical formula of the positive electrode active material is $Na_xM_{(1-y)}Ca_yO_2$, where M includes a transition metal element, $x = 0.8$ to $1.1$, and $0.005 \leq y \leq 0.015$; and where more than 95wt% of Ca element is distributed in a surface layer of a single-crystal particle of the positive electrode active material, and a thickness of the surface layer is 1 $\mu$m. The positive electrode active material has a relatively low residual alkali content and improved air stability, and thus cycle performance of batteries is improved when it is applied to the batteries.

Calcium element distribution

FIG. 2

EP 4 723 243 A1

## Description

This application claims priority to China patent application No. 202311296382.2, filed with the China National Intellectual Property Administration on October 9, 2023, and entitled "POSITIVE ELECTRODE ACTIVE MATERIAL AND PREPARATION METHOD THEREOF, POSITIVE ELECTRODE SHEET, BATTERY AND ELECTRICAL APPARATUS", which is hereby incorporated by reference in its entirety.

## TECHNICAL FIELD

The present application relates to the field of new energy technologies and, in particular, to a positive electrode active material and a preparation method thereof, a positive electrode sheet, a battery and an electrical apparatus.

## BACKGROUND

In recent years, with the wide application of batteries in mobile phones, electric vehicles and other consumer products, there is a higher demand for the cycle performance of the batteries. The positive electrode active material is one of the important materials of the batteries, and the structural stability of this material affects the cycle performance of the batteries.

## SUMMARY

Based on this, it is necessary to provide a positive electrode active material and a preparation method thereof, a positive electrode sheet, a battery and an electrical apparatus, capable of improving the cycle performance of the battery.

The present application is realized by the following technical solutions.

An aspect of the present application provides a positive electrode active material, a chemical formula of the positive electrode active material is $Na_xM_{(1-y)}Ca_yO_2$, where M includes a transition metal element, x = 0.8 to 1.1, and $0.005 \leq y \leq 0.015$; and
where more than 95wt% of Ca element is distributed in a surface layer of a single-crystal particle of the positive electrode active material, and a thickness of the surface layer is 1 $\mu$m.

The above positive electrode active material contains a specific chemical composition, especially the content y of Ca is controlled within the above specific range, and more than 95wt% of the Ca element is distributed in the 1 $\mu$m-thick surface layer of the single-crystal particle of the positive electrode active material, so that the Ca element distributed on the surface of the single-crystal particle may form relatively stable calcium carbonate with moisture and carbon dioxide in the air to protect the single-crystal particle, preventing the moisture and carbon dioxide in the air from reacting with Na element in the single-crystal particle, so as to block continuous precipitation of Na to form residual alkali, and thus the residual alkali content of the positive electrode active material is reduced, the air stability of the positive electrode active material is improved, and the problem of cycle deterioration caused by complex phase transition of the positive electrode active material during charging and discharging is suppressed. In this way, when the positive electrode active material is applied to batteries, the cycle performance of the batteries is improved.

In some embodiments, M includes at least one of Fe, Ni, Mn, Co, V, Ti, Cr, Cu and Zn.

In some embodiments, M includes at least one of Fe, Ni, Mn, Co, Ti and Zn.

In some embodiments, the positive electrode active material meets at least one of the following conditions:

(1) Dv50 of the single-crystal particle in the positive electrode active material is 6 to 11 $\mu$m; and
(2) the positive electrode active material is O3-phase layered oxide.

In some embodiments, the positive electrode active material meets at least one of the following conditions:

(1) when water is used as a solvent, a residual alkali $CO_3^{2-}$ of the positive electrode active material is <6000 ppm; and
(2) when ethanol is used as a solvent, a residual alkali $OH^-$ of the positive electrode active material is < 900 ppm.

Another aspect of the present application provides a preparation method of a positive electrode active material, including the following steps:

providing a sodium source, a calcium source and an M source according to a chemical formula $Na_xM_{(1-y)}Ca_yO_2$, where M includes a transition metal element, x = 0.8 to 1.1, and $0.005 \leq y \leq 0.015$; and
mixing the sodium source, the calcium source and the M source, sintering at 850 to 1000°C for 8 to 16 h in an oxygen-containing atmosphere, and annealing at 500 to 650°C for 7 - 12 h.

In some embodiments, the preparation method meets at least one of the following conditions:

(1) a heating rate of heating to a temperature of the sintering is 2 to 8°C/min;
(2) before heating to the temperature of the sintering, the preparation method further includes a step of heating to 500 to 700°C for pre-sintering for 2 to 6 h;
(3) the temperature of the sintering is lowered to a temperature of the annealing at a rate of 2 to 5°C/min; or the temperature of the sintering is lowered first and then increased to the temperature of the annealing; and
(4) the annealing is performed in an oxygen-containing atmosphere.

In some embodiments, the step of mixing the sodium source, the calcium source and the M source includes:

mixing the sodium source, the calcium source and the M source with a solvent to form a slurry;
drying the slurry to obtain a mixed powder; and
performing the subsequent sintering step on the mixed powder.

In some embodiments, the preparation method meets at least one of the following conditions:

(1) a mass content of a solid in the slurry is 20 to 50%;
(2) Dv50 of the solid in the slurry is controlled to be 0.5 to 1 $\mu$m;
(3) the drying is spray drying, and an inlet temperature of the spray drying is 200 to 270°C, and an outlet temperature thereof is controlled to be 95 to 145°C; and
(4) Dv50 of the mixed powder is controlled to be 20 to 30 $\mu$m.

Another aspect of the present application provides a positive electrode sheet, including any one of the above positive electrode active materials or the positive electrode active material prepared by any one of the above preparation methods.

Another aspect of the present application provides a battery including the above positive electrode sheet.

Another aspect of the present application provides an electrical apparatus including the above battery.

**BRIEF DESCRIPTION OF DRAWINGS**

FIG. 1 is a cross-sectional HADDF and a Ca element distribution map of a positive electrode active material prepared in Example 1.
FIG. 2 is a graph of Ca element distribution at different distances from a surface of a single-crystal particle of the positive electrode active material prepared in Example 1.
FIG. 3 is a graph of Ca element distribution at different distances from a surface of a single-crystal particle of a positive electrode active material prepared in Example 2.
FIG. 4 is a graph of Ca element distribution at different distances from a surface of a single-crystal particle of a positive electrode active material prepared in Example 3.
FIG. 5 is a graph of Ca element distribution at different distances from a surface of a single-crystal particle of a positive electrode active material prepared in Example 4.
FIG. 6 is an SEM image of a positive electrode active material prepared in Comparative Example 1.
FIG. 7 is a schematic diagram of EDS analysis sampling of scale-like flakes on a surface of the positive electrode active material prepared in Comparative Example 1, and results of EDS element-composition analysis corresponding to spectrum labels.
FIG. 8 is an SEM and a Ca element distribution map obtained by EDS test on a positive electrode active material prepared in Comparative Example 3.
FIG. 9 is a graph of Ca element distribution at different distances from a surface of a single-crystal particle of the positive electrode active material prepared in Comparative Example 3.

**DESCRIPTION OF EMBODIMENTS**

In order to facilitate the understanding of the present application, the present application may be described more comprehensively with reference to the relevant drawings. Preferred embodiments of the present application are shown in the drawings. However, the present application may be implemented in many different forms and is not limited to the embodiments described herein. It should be understood that the purpose of providing these embodiments is to provide a more thorough and comprehensive understanding of the disclosure of the present application.

Unless otherwise defined, all technical and scientific terms used herein have the same meaning as commonly understood by those skilled in the art to which the present application pertains. The terms used herein in the specification of the present application are only for the purpose of describing specific embodiments, and is not intended to limit the present application. As used herein, the term "and/or" includes any and all combinations of one or more related listed items.

An embodiment of the present application provides a positive electrode active material, and a chemical formula of the positive electrode active material is $Na_xM_{(1-y)}Ca_yO_2$, where M includes a transition metal element, x = 0.8 to 1.1, and $0.005 \leq y \leq 0.015$.

More than 95wt% of Ca element is distributed in a surface layer of a single-crystal particle of the positive electrode active material, and a thickness of the surface layer is 1 $\mu$m.

Herein, the surface layer of the single-crystal particle includes an outer surface of the single-crystal particle and an area near the outer surface; specifically, the thickness of the surface layer is 1 $\mu$m. In other words, more than 95wt% of Ca element is distributed in the 1 $\mu$m-thick surface layer of the single-crystal particle of the positive electrode active material. The thickness of the surface layer may be determined by a transmission electron microscopy or a scanning electron microscopy.

The Ca element distribution of the above positive electrode active material may be obtained by performing a high-resolution transmission electron microscopy (HADDF) on a cross section of the single-crystal particle of the positive electrode active material, and Ca element analysis on the spectrum obtained by HADDF test. Specifically, by a graph of the obtained Ca element distribution at different distances from the surface of the single-crystal particle of the positive electrode active material, it is determined that that more than 95wt% of Ca element is distributed in 1 $\mu$m-thick surface layer of the single-crystal particle of the positive electrode active material.

The above positive electrode active material contains a specific chemical composition, especially the content y of Ca is controlled within the above specific range, and more than 95wt% of Ca element is distributed in the 1 $\mu$m-thick surface layer of the single-crystal particle of the positive electrode active material, so that the Ca element distributed on the surface of the single-crystal particle may form relatively stable calcium carbonate with moisture and carbon dioxide in the air to protect the single-crystal particle, preventing the moisture and carbon dioxide in the air from reacting with Na element in the single-crystal particle, so that the process of continuously precipitating Na to form residual alkali is blocked, the residual alkali content of the positive electrode active material is reduced, the air stability of the positive electrode active material is improved, and the problem of cycle deterioration caused by complex phase transition of the positive electrode active material during charging and discharging is suppressed. In this way, when the positive electrode active material is applied to batteries, the cycle performance of the batteries is improved.

If a doping ratio of the Ca element is too large, that is, y is too large, the Ca element may form scale-like fine powder on the surface of the single-crystal particle, which may lead to a large amount of precipitation of the Ca element, fail to block the Na reaction and thus fail to provide a stabilizing effect, and at the same time affect the capacity utilization.

The above positive electrode active material is a sodium ion active material. Compared with a lithium ion active material, the sodium ion active material has the advantages of abundant resources, low cost, high and low temperature performance and safety performance.

In some embodiments, x may be 0.8, 0.85, 0.9, 0.95, 1, 1.1, or a range formed by any two of these endpoints. Further, x = 0.8 to 1; even further, x = 0.95 to 1.

In some embodiments, y may be 0.005, 0.01, 0.015, or a range formed by any two of these endpoints. Further, y = 0.01 to 0.015.

In some embodiments, M includes at least one of Fe, Ni, Mn, Co, V, Ti, Cr, Cu and Zn. It may be understood that M may be one or more of the above elements.

Further, M includes at least one of Fe, Ni, Mn, Co, Ti and Zn.

As an example, M may be Fe, Ni, Mn, Co, Ti or Zn, or two, three, four or five of Fe, Ni, Mn, Co and Zn.

As an example, M may be three of Ni, Fe and Mn; or three of Ni, Fe and Mn together with either Ti or Zn.

Further, the chemical formula of the positive electrode active material is $Na_x(NiFeMn)_aZn_bTi_cCa_yO_2$, where a + b + c = 1-y; further, b = 0 to 0.2 and c = 0 to 0.2; and even further, b = 0.1 to 0.2, and c = 0.1 to 0.2.

As an example, the positive electrode active material may be at least one of $Na_{0.95}Ni_{0.33}Fe_{0.33}Mn_{0.33}Ca_{0.01}O_2$, $NaNi_{0.2}Fe_{0.25}Mn_{0.4}Zn_{0.14}Ca_{0.01}O_2$, $NaNi_{0.19}Fe_{0.25}Mn_{0.38}Ti_{0.17}Ca_{0.01}O_2$, $NaNi_{0.325}Fe_{0.33}Mn_{0.33}Ca_{0.015}O_2$, $NaNi_{0.205}Fe_{0.25}Mn_{0.4}Zn_{0.13}Ca_{0.015}O_2$, $Na_{0.95}Ni_{0.33}Fe_{0.33}Mn_{0.335}Ca_{0.005}O_2$, $Na_{0.95}Ni_{0.33}Fe_{0.33}Mn_{0.325}Ca_{0.015}O_2$ and $NaNi_{0.185}Fe_{0.25}Mn_{0.38}Ti_{0.17}Ca_{0.015}O_2$.

In some embodiments, the above positive electrode active material includes a single-crystal particle. Further, the positive electrode active material is a single-crystal particle. Where Dv50 of the single-crystal particles is 6 to 11 $\mu$m. The particle diameter of Dv50 is a volume average particle diameter, which refers to the corresponding particle diameter when a cumulative volume distribution percentage of the particle reaches 50%.

In some embodiments, the above positive electrode active material is an O3-phase layered oxide. Further, the above positive electrode active material is a single-crystal particle. Further, the above positive electrode active material is a single-crystal particle with a morphology similar to rounded rectangle.

In some embodiments, water is used as a solvent, and the residual alkali $CO_3^{2-}$ of the above positive electrode active material is less than 6000 ppm, and further less than 4000 ppm, where ppm is based on mass.

In some embodiments, ethanol is used as a solvent, and the residual alkali $OH^-$ of the above positive electrode active material is less than 900 ppm, and further less than 500ppm, where ppm is based on mass.

Another embodiment of the present application provides a preparation method of any one of the above positive electrode active materials, including the following steps S10 to S20:

> S10, providing a sodium source, a calcium source and an M source according to a chemical formula $Na_xM_{(1-y)}Ca_yO_2$, where M includes a transition metal element, x = 0.8 to 1.1, and $0.005 \leq y \leq 0.015$; and
> S20, mixing the sodium source, the calcium source and the M source, sintering at 850 to 1000°C for 8 to 16 h in an oxygen-containing atmosphere, and then annealing at 500 to 650°C for 7 h to 12 h.

In the above preparation method, after the sodium source, the calcium source and the M source are mixed, they are first heated to a high temperature in an oxygen-containing atmosphere for sintering, and during the high-temperature sintering, Ca element may be doped into the crystal lattice of the material; and then they are cooled to a low temperature for an annealing treatment, and during the annealing treatment, the Ca element may migrate from the crystal lattice to the surface of the single-crystal particle, thereby forming relatively uniform segregation and enrichment on the surface of the single-crystal particle.

In some embodiments, the sodium source includes but is not limited to at least one of sodium carbonate, sodium hydroxide, sodium oxalate, sodium citrate, sodium acetate and the like.

In some embodiments, the calcium source includes but is not limited to at least one of calcium hydroxide, calcium carbonate, calcium oxalate, calcium citrate, calcium acetate and the like. Preferably, the calcium source is calcium hydroxide, which has good reaction activity.

In some embodiments, the M source includes but is not limited to at least one of oxide, hydroxide, carbonate, oxalate, citrate, acetate and the like of a transition metal.

In some embodiments, a heating rate of heating to the sintering temperature of 850 to 1000°C is 2 to 8°C/min.

In some embodiments, the step S20 further includes a step of heating the mixed product of the sodium source, the calcium source and the M source to 500 to 700°C for pre-sintering for 2 to 6 h before heating to the sintering temperature of 850 to 1000°C. Further, the heating rate to the pre-sintering temperature of 500 to 700°C is 2 to 8°C/min; further, the heating rate from 500 - 700°C to the sintering temperature of 850 - 1000°C is 2 to 8°C/min. Further, the sintered product is cooled from the temperature of the annealing treatment of 500 to 650°C to room temperature together with the furnace.

In some embodiments, the sintering temperature of 850 to 1000°C is lowered to the temperature of the annealing treatment of 500 to 650°C at a rate of 2 to 5°C/min.

Or, the sintering temperature is first increased to 850 to 1000°C, and naturally cooled to room temperature, and then heated in the furnace again to 500 to 650°C for annealing, and the subsequent cooling process is not controlled, naturally cooling to room temperature.

In some embodiments, the sintering and the annealing treatment are performed in an oxygen-containing atmosphere. The oxygen-containing atmosphere includes but is not limited to air and oxygen atmospheres.

In some embodiments, the step of mixing the sodium source, the calcium source and the M source in S20 includes steps S21 to S22.

S21, mixing a sodium source, a calcium source and an M source with a solvent to form a slurry.

Further, a mass content of a solid in the slurry is controlled to be 20 to 50%, optionally, 25 to 45%, or 30 to 40%.

Further, Dv50 of the solid in the slurry is controlled to be 0.5 to 1 μm, and optionally, the Dv50 of the solid in the slurry is controlled to be 0.6 μm to 0.9 μm.

Further, the solvent may be water.

S22, drying the slurry to obtain a mixed powder. It is worth noting that the subsequent sintering step in S20 is performed using the mixed powder.

Further, the drying is spray drying, and an inlet temperature of the spray drying is 200 to 270°C, and an outlet temperature thereof is controlled to be 95 to 145°C. Preferably, the inlet temperature of the spray drying is 230°C to 250°C, and the outlet temperature thereof is 110°C to 120°C.

Further, Dv50 of the mixed powder is controlled to be 20 to 30 μm. It may be understood that the Dv50 of the mixed powder may be controlled by adjusting a centrifugal frequency and feed rate of the spray drying.

It may be understood that during the spray drying, primary particles (i.e., the single-crystal particles) agglomerate to form a secondary particle. By controlling the Dv50 of the solid in the slurry to 0.5 μm to 1 μm, the mixed powder may form the secondary particles with a relatively dense arrangement, thereby enabling greater loading density in subsequent pre-sintering, sintering, and annealing treatment.

It may be understood that in addition to the above step of mixing, the sodium source, the calcium source and the M source may be mixed by solid ball milling and other methods.

It may be understood that the secondary particles in the mixed powder are gradually transformed into the single-crystal particles through the subsequent sintering and annealing treatment.

Further, the Dv50 of the single-crystal particles in the positive electrode active material is 6 to 11 μm. Another embodiment of the present application also provides a positive electrode sheet, which includes the above positive electrode active material.

Generally, a positive electrode sheet includes a positive electrode current collector and a positive electrode active material layer disposed on at least one surface of the current collector. The positive electrode active material layer contains the above positive electrode active material.

In some embodiments, the positive electrode current collector includes, but is not limited to, a metal current collector, for example, a metal foil such as aluminum foil.

In some embodiments, a binder is optionally included in the positive electrode active material layer. The binder may include at least one of polyvinylidene fluoride (PVDF), polytetrafluoroethylene (PTFE) and fluorinated acrylate resin.

In some embodiments, a conductive agent is optionally included in the positive electrode active material layer. The conductive agent may include at least one of superconductive carbon, acetylene black, carbon black, Ketjen black, carbon dot, carbon nanotube, graphene and carbon nanofiber.

Another embodiment of the present application also provides a battery, which includes the above positive electrode sheet, a negative electrode sheet and an electrolyte.

In some embodiments, the negative electrode sheet includes a negative electrode current collector. Further, the negative electrode sheet further includes a negative electrode film layer disposed on at least one surface of the negative electrode current collector. Further, a negative electrode active material may also be included in the negative electrode film layer.

Further, the negative electrode active material may include, but is not limited to, at least one of graphite, soft carbon, hard carbon, silicon-based material and the like.

In some embodiments, a binder is optionally included in the negative electrode film layer. The binder may include at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, a conductive agent is optionally included in the negative electrode film layer. The conductive agent may include at least one of superconductive carbon, acetylene black, carbon black, Ketjen black, carbon dot, carbon nanotube, graphene and carbon nanofiber.

In some embodiments, the electrolyte is in the form of an electrolyte solution, which includes a sodium salt electrolyte and a solvent.

Further, the sodium salt electrolyte includes, but is not limited to, at least one of sodium hexafluorophosphate, sodium tetrafluoroborate, sodium perchlorate, sodium hexafluoroarsenate, sodium bis(fluorosulfonyl)imide, sodium bis(trifluoromethanesulfonyl)imide, sodium trifluoromethyl sulfonate, sodium difluorophosphate, sodium difluoro(oxalato)borate, sodium bis(oxalato)borate, sodium bis (trifluoromethyl sulfonyl) imine, sodium difluorodioxalate phosphate and sodium tetrafluorooxalate phosphate.

Further, the solvent includes, but is not limited to, at least one of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

It may be understood that the electrolyte solution may also include some additives, including but not limited to a film-forming additive.

In some embodiments, the above battery further includes a separator, and the separator is disposed between the positive electrode sheet and the negative electrode sheet, and is configured to prevent conduction between the positive electrode sheet and the negative electrode sheet.

In some embodiments, the separator includes, but is not limited to, at least one of polyethylene, polypropylene and polyvinylidene fluoride.

In some embodiments, the battery includes, but is not limited to, at least one of a stacked battery and a wound battery.

Another embodiment of the present application provides an electrical apparatus, which includes the above battery.

In some embodiments, the electrical apparatus may include, but is not limited to, mobile devices, electric vehicles, electric trains, ships and the like.

The mobile devices include, but are not limited to, mobile phones, notebook computers, and the like. The electric vehicles include, but are not limited to, pure electric vehicles, hybrid electric vehicles, plug-in hybrid electric vehicles, electric bicycles, electric scooters, electric trucks and the like.

In order to make the purposes, technical solutions and advantages of the present application more concise and clear, the present application is illustrated by the following specific examples, but the present application is not limited to these examples. The examples described below are only better examples of the present application and may be used to describe the present application, but cannot be understood as limiting the scope of the present application. It should be noted that that any modification, equivalent substitution and improvement made within the spirit and principles of the present application should be included in the protection scope of the present application.

In order to better illustrate the present application, the following may further illustrate the content of the present application in conjunction with examples. The following are specific examples.

Example 1

1. 2.237 kg of NiO, 2.392 kg of $Fe_2O_3$, 2.285 kg of $Mn_2O_3$, 67.25 g of $Ca(OH)_2$, and 4.563 kg of $Na_2CO_3$ were weighed according to the target chemical formula $Na_{0.95}Ni_{0.33}Fe_{0.33}Mn_{0.33}Ca_{0.01}O_2$, then added into 25 L of deionized water to form a slurry with a solid mass content of 25%;

2. the above slurry was ground until Dv50 is 0.9 $\mu$m;

3. spray drying was performed on the ground slurry, where an inlet temperature was controlled to be 250°C, an outlet temperature was controlled to be 115°C, a centrifugal frequency was adjusted to be 325 Hz, and the Dv50 of the mixed powder after the spraying was controlled to be 22 $\mu$m;

4. the mixed powder was heated to 550°C at a heating rate of 2°C/min and pre-sintered for 5 h, then continued to be heated to 935°C at a heating rate of 2°C/min and sintered for 11 h, then cooled to 600°C at a rate of 5°C/min, annealed for 10 hours, and crushed to obtain a product with the Dv50 particle diameter of 9 $\mu$m, and the product is single-crystal particles.

Examples 2 to 5

They are substantially the same as Example 1, the difference is only in that the composition of the target chemical formula in step 1 is different (addition ratio of the corresponding raw materials is different), that is, the composition of the positive electrode active material is different. Details are shown in Table 1 below.

Example 6

It is substantially the same as Example 1, the difference is only in that the pre-sintering step is omitted, and it is directly heated to 935°C at a heating rate of 2°C/min and sintered for 11h, and the subsequent process remains unchanged. Details are shown in Table 1 below.

Examples 7 and 8

They are substantially the same as Example 1, and the difference is only in that the temperature and time of the sintering treatment are different. Details are shown in Table 1 below.

Examples 9 and 10

They are substantially the same as Example 1, and the difference is only in that the temperature and time of the pre-sintering treatment are different. Details are shown in Table 1 below.

Examples 11 and 12

They are substantially the same as Example 1, and the difference is only in that the inlet and outlet temperatures controlled in the spray drying are different, and the Dv50 of the slurry after grinding is different. Details are shown in Table 1 below.

Comparative Example 1

It is substantially the same as Example 1, and the difference is only in that an addition amount of $Ca(OH)_2$ is different. Details are as follows:

1. corresponding masses of NiO, $Fe_2O_3$, $Mn_2O_3$, $Ca(OH)_2$ and $Na_2CO_3$ were weighed according to the target chemical formula $Na_{0.95}Ni_{0.3}Fe_{0.33}Mn_{0.33}Ca_{0.04}O_2$, and added into deionized water to form a slurry;

2. the above slurry was ground until D50 is 0.9 $\mu$m;

3. spray drying was performed on the ground slurry, where the inlet temperature was controlled to be 250°C, the outlet temperature was controlled to be 115°C, the centrifugal frequency was adjusted to be 325Hz, and the D50 of the mixed powder after the spraying was controlled to be 22 $\mu$m;

4. the mixed powder was heated to 550°C at a heating rate of 2°C/min and pre-sintered for 5 h, then continued to be heated to 935°C at a heating rate of 2°C/min and sintered for 11 h, then cooled to 600°C at a rate of 5°C/min, and annealed for 10 h to obtain a product.

Comparative Example 2

1. NiO, $Fe_2O_3$, $Mn_2O_3$ and $Na_2CO_3$ were weighed according to the target chemical formula $Na_{0.95}Ni_{1/3}Fe_{1/3}Mn_{1/3}O_2$, and added into deionized water to form a slurry;

2. the above slurry was ground until D50 is 0.9 $\mu$m;

3. spray drying was performed on the ground slurry, where an inlet temperature was controlled to be 250°C, an outlet temperature was controlled to be 115°C, a centrifugal frequency was adjusted to be 325 Hz, and the D50 of the mixed powder after the spraying was controlled to be 22 $\mu$m;

4. the mixed powder was heated to 550°C at a heating rate of 2°C/min and pre-sintered for 5 h, then continued to be heated to 935°C at a heating rate of 2°C/min and sintered for 11 h, then cooled to 600°C at a rate of 5°C/min, and annealed for 10 h to obtain a product.

Comparative Example 3

It is substantially the same as Example 1, the difference is only in that after being heated to 935°C and sintered for 11 h in step 4, it was cooled to room temperature together with the furnace.

Comparative Example 4

It is substantially the same as Example 1, and the difference is only in that the addition amount of $Ca(OH)_2$ is different. Details are as follows:

1. corresponding mass of NiO, $Fe_2O_3$, $Mn_2O_3$, $Ca(OH)_2$ and $Na_2CO_3$ are weighed according to the target chemical formula $Na_{0.95}Ni_{0.315}Fe_{0.33}Mn_{0.33}Ca_{0.025}O_2$, and added into deionized water to form a slurry. The subsequent steps are the same.

Table 1

| Example | Composition | Inlet temperature °C | Outlet temperature °C | Dv50 of slurry /$\mu$m | Pre-sintering | Sintering | Annealing treatment | Dv50 of product /$\mu$m |
|---|---|---|---|---|---|---|---|---|
| 1 | $Na_{0.95}Ni_{0.33}Fe_{0.33}Mn_{0.33}Ca_{0.01}O_2$ | 250 | 115 | 0.9 | 550°C ,5h | 935°C ,11h | 600°C ,10h | 9 |
| 2 | $Na_{0.95}Ni_{0.33}Fe_{0.33}Mn_{0.335}Ca_{0.005}O_2$ | 250 | 115 | 0.9 | 550°C ,5h | 935°C ,11h | 600°C ,10h | 9 |
| 3 | $Na_{0.95}Ni_{0.33}Fe_{0.33}Mn_{0.325}Ca_{0.015}O_2$ | 250 | 115 | 0.9 | 550°C ,5h | 935°C ,11h | 600°C ,10h | 9 |
| 4 | $NaNi_{0.2}Fe_{0.25}Mn_{0.4}Zn_{0.14}Ca_{0.01}O_2$ | 250 | 115 | 0.9 | 550°C ,5h | 935°C ,11h | 600°C ,10h | 9 |
| 5 | $NaNi_{0.19}Fe_{0.25}Mn_{0.38}Ti_{0.17}Ca_{0.01}O_2$ | 250 | 115 | 0.9 | 550°C ,5h | 935°C ,11h | 600°C ,10h | 9 |
| 6 | $Na_{0.95}Ni_{0.33}Fe_{0.33}Mn_{0.33}Ca_{0.01}O_2$ | 250 | 115 | 0.9 | - | 935°C ,11h | 600°C ,10h | 8 |
| 7 | $Na_{0.95}Ni_{0.33}Fe_{0.33}Mn_{0.33}Ca_{0.01}O_2$ | 250 | 115 | 0.9 | 550°C ,5h | 880°C ,16h | 650°C ,12h | 11 |
| 8 | $Na_{0.95}Ni_{0.33}Fe_{0.33}Mn_{0.33}Ca_{0.01}O_2$ | 250 | 115 | 0.9 | 550°C ,5h | 1000°C ,8h | 500°C ,7h | 6 |
| 9 | $Na_{0.95}Ni_{0.33}Fe_{0.33}Mn_{0.33}Ca_{0.01}O_2$ | 250 | 115 | 0.9 | 500°C ,6h | 935°C ,11h | 600°C ,10h | 9 |
| 10 | $Na_{0.95}Ni_{0.33}Fe_{0.33}Mn_{0.33}Ca_{0.01}O_2$ | 250 | 115 | 0.9 | 700°C ,5h | 935°C ,11h | 600°C ,10h | 9 |
| 11 | $Na_{0.95}Ni_{0.33}Fe_{0.33}Mn_{0.33}Ca_{0.01}O_2$ | 270 | 145 | 0.5 | 550°C ,5h | 935°C ,11h | 600°C ,10h | 9 |
| 12 | $Na_{0.95}Ni_{0.33}Fe_{0.33}Mn_{0.33}Ca_{0.01}O_2$ | 200 | 95 | 1 | 550°C,5h | 935°C, 11h | 600°C, 10h | 9 |
| D1 | $Na_{0.95}Ni_{0.3}Fe_{0.33}Mn_{0.33}Ca_{0.04}O_2$ | 250 | 115 | 0.9 | 550°C ,5h | 935°C ,11h | 600°C ,10h | 9 |
| D2 | $Na_{0.95}Ni_{1/3}Fe_{1/3}Mn_{1/3}O_2$ | 250 | 115 | 0.9 | 550°C ,5h | 935°C ,11h | 600°C ,10h | 9 |
| D3 | $Na_{0.95}Ni_{0.33}Fe_{0.33}Mn_{0.33}Ca_{0.01}O_2$ | 250 | 115 | 0.9 | 550°C ,5h | 935°C ,11h | - | 9 |
| D4 | $Na_{0.95}Ni_{0.315}Fe_{0.33}Mn_{0.33}Ca_{0.025}O_2$ | 250 | 115 | 0.9 | 550°C ,5h | 935°C ,11h | 600°C ,10h | 9 |

In Table 1, D1 to D4 represent Comparative Example 1 to Comparative Example 4, respectively.

The following is performance tests.

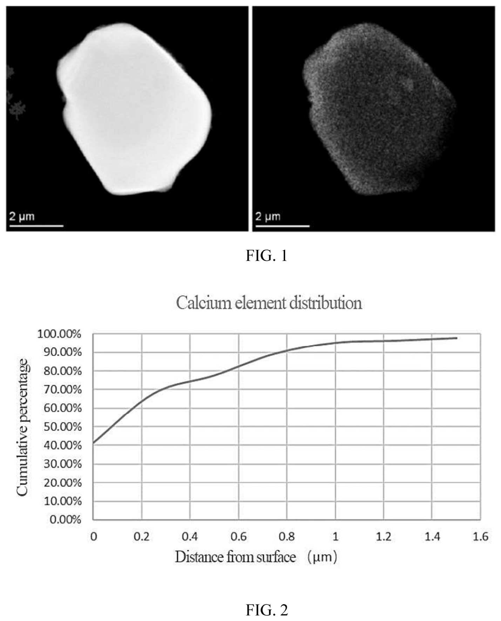

1. A cross section of the positive electrode active material prepared in Example 1 was examined by a high-resolution transmission electron microscopy (HADDF) to obtain the left figure in FIG. 1, and the left figure was subjected to Ca element mapping to obtain the right figure in FIG. 1. As can be seen from FIG. 1, the morphology of the positive electrode active material prepared in Example 1 was single-crystal particles.

Then, the statistical result of FIG. 2 was obtained according to the right figure in FIG. 1, that is, a graph of the Ca element distribution at different distances from the surface of the single-crystal particle of the positive electrode active material prepared in Example 1 was obtained. It can be seen that more than 95wt% of Ca element was distributed in a 1 $\mu$m-thick surface layer of the single-crystal particle of the positive electrode active material.

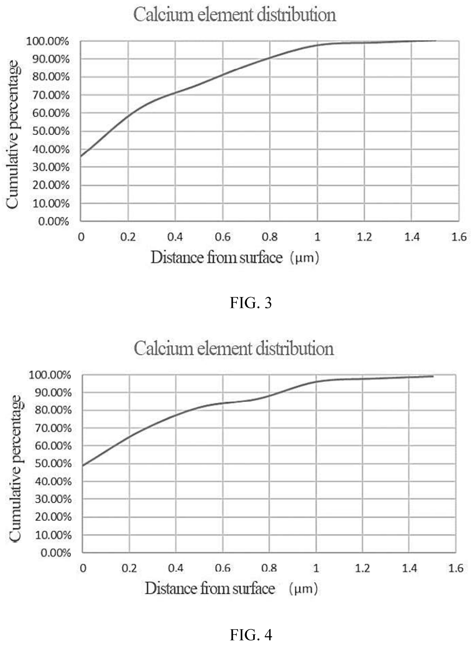

Morphologies and graphs of Ca element distribution of other examples were similar to those of Example 1. As shown in FIG. 3 to FIG. 5, the graphs of the Ca element distribution at different distances from the surface of the single-crystal particle of the positive electrode active materials prepared in Examples 2 to 4 were respectively shown, and it can be seen that more than 95wt% of the Ca element was distributed in the 1 $\mu$m-thick surface layer of the single-crystal particle of the positive electrode active materials.

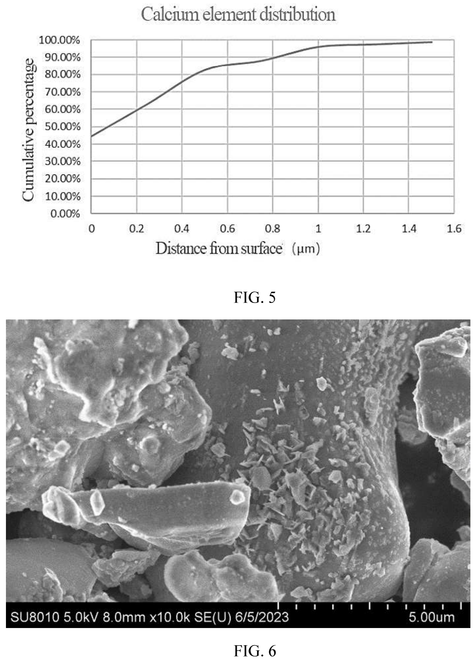

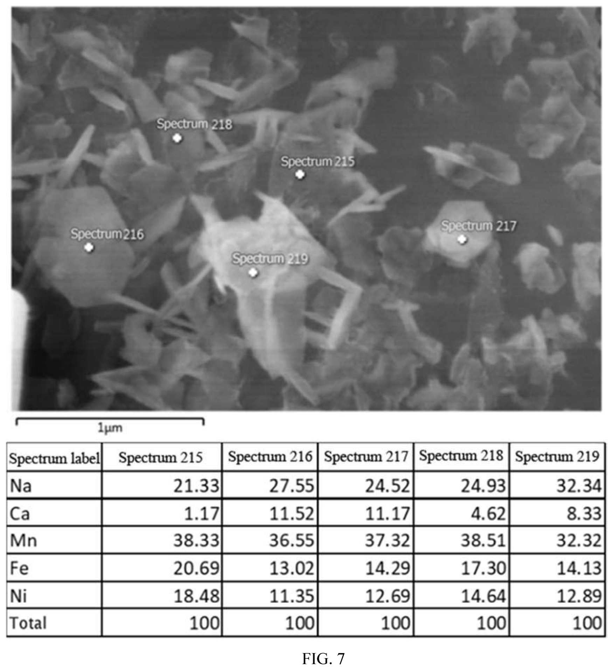

2. The positive electrode active material prepared in Comparative Example 1 was examined by a scanning electron microscopy, and the result are shown in FIG. 6. In Comparative Example 1, since the doping ratio of the Ca element is too large, that is, y is too large, the Ca element forms scale-like fine powders on the surface of the single-crystal particle, which leads to a large amount of precipitation of the Ca element. As shown in the upper figure of FIG. 7, the scale-like fine powders at four points were selected and analyzed by EDS respectively, and the quantitative analysis results of the elements were obtained, as shown in the lower figure of FIG. 7.

In FIG. 7, the unit of the elements in the lower figure is wt%. It can be seen that the Ca content in the scale-like micro-particles on the surface is too large. The reason for this is that excessive doping of the Ca element causes a large amount of Ca to precipitate during annealing and segregate to form the scale-like micro-particles with other metal element. The composition of Ca and other elements of the scale-like particles are significantly different from the designed ratio, and the scale-like particles are unintended substances produced by the re-reaction of excessive Ca element with the surface during precipitation.

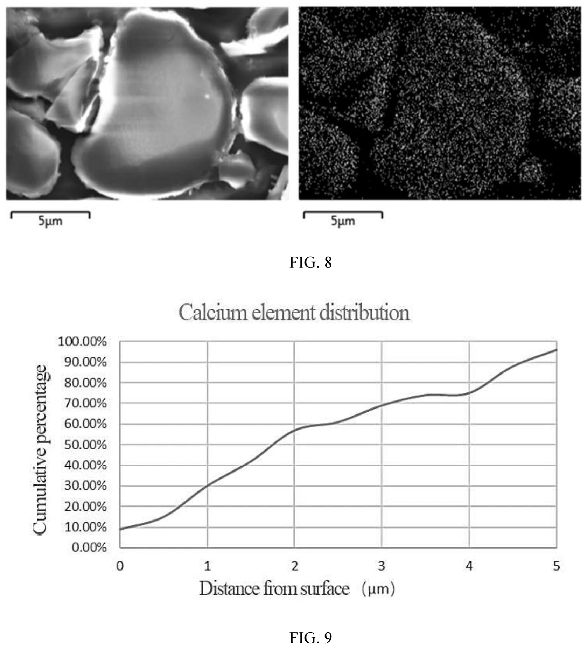

3. The SEM image obtained by the EDS test on the positive electrode active material prepared in Comparative Example 3 was shown in the left figure in FIG. 8, and the left figure was subjected to Ca element mapping, to obtain the Ca element distribution map, as shown in the right figure in FIG. 8. According to the right figure in FIG. 8, the curves of the Ca element distribution at different distances from the surface of the single-crystal particle of the positive electrode active material prepared in Comparative Example 3, as shown in FIG. 9, were obtained. It can be seen that the Ca element was substantially uniformly distributed at different distances from the surface of the single-crystal particle of the positive electrode active material prepared in Comparative Example 3.

4. Residual Alkali Test

After the positive electrode active material samples were stored in the room at normal temperature and normal pressure for 7 days, the residual alkali in the samples was detected by 888/905 automatic potentiometric titrator according to GB/T 9725-2007, where when $CO_3^{2-}$ was detected, the solvent was deionized water; and when $OH^-$ was detected, the solvent was ethanol.

5. Cycle Performance

Initial capacity: after charged and discharged for 2 cycles at 0.1C and 2 cycles at 0.33C, the batteries were subjected to the charge-discharge cycle at a rate of 1C at 25°C, and the specific capacity of the batteries was tested, and the initial capacity was the discharge capacity of the first cycle at 1C;

50-cycle capacity retention rate = Discharge capacity at 50th cycle/Discharge capacity at 1st cycle *100%;

100-cycle capacity retention rate = Discharge capacity at 100th cycle/Discharge capacity at 1st cycle *100%.

After charged and discharged for 2 cycles at 0.1C and 2 cycles at 0.33C, the batteries were subjected to charge-discharge cycle at 25°C at a rate of 1C, the volume of the battery before the start of the cycle was taken as an initial value Vo, the volume at the 50th cycle was taken as Vso and the volume at the 100th cycle was taken as $V_{100}$.

50-cycle volume expansion rate: $(V_{50} - V_0)/V_0 \times 100\%$.

100-cycle volume expansion rate: $(V_{100} - V_0)/V_0 \times 100\%$.

The test results of the residual alkali of the positive electrode active materials of the examples and the comparative examples and the test results of the corresponding battery performance are shown in Table 2.

Table 2

| Group | Residual alkali $CO_3^{2-}$ | | Residual alkali $OH^-$ | | Cycle performance | | | | |
|---|---|---|---|---|---|---|---|---|---|
| | Initial /ppm | 7D/ppm | Initial /ppm | 7D / ppm | Initial capacity mAh/g | 50-cycle capacity mAh/g | 50-cycle volume expansion rate % | 100-cycle capacity mAh/g | 100-cycle volume expansion rate % |
| Example 1 | 2735 | 3022 | 377 | 424 | 158 | 155 | 1.17 | 152 | 3.56 |
| Example 2 | 3125 | 3622 | 511 | 622 | 159 | 155 | 1.42 | 151 | 4.01 |
| Example 3 | 2417 | 2731 | 352 | 393 | 156 | 154 | 0.99 | 151 | 3.12 |
| Example 4 | 2232 | 2334 | 263 | 339 | 149 | 146 | 0.83 | 143 | 2.17 |
| Example 5 | 2642 | 3030 | 412 | 567 | 153 | 150 | 1.01 | 148 | 2.33 |
| Example 6 | 2823 | 3112 | 401 | 433 | 152 | 149 | 1.78 | 145 | 4.22 |
| Example 7 | 2667 | 2837 | 348 | 397 | 153 | 148 | 1.02 | 142 | 3.11 |
| Example 8 | 2998 | 3827 | 429 | 549 | 152 | 149 | 1.63 | 144 | 3.97 |
| Example 9 | 3002 | 3463 | 412 | 550 | 160 | 157 | 1.98 | 154 | 3.22 |
| Example 10 | 2346 | 2738 | 310 | 376 | 156 | 152 | 2.01 | 148 | 4.56 |
| Example 11 | 3482 | 3647 | 129 | 273 | 157 | 154 | 1.32 | 152 | 3.98 |
| Example 12 | 2435 | 2722 | 629 | 882 | 158 | 153 | 1.97 | 149 | 4.20 |
| Comparative Example 1 | 7394 | 12219 | 2483 | 4122 | 152 | 144 | 2.93 | 137 | 9.23 |
| Comparative Example 2 | 8392 | 14239 | 3012 | 5829 | 161 | 145 | 5.91 | 133 | 11.83 |
| Comparative Example 3 | 7838 | 12172 | 3526 | 5137 | 161 | 147 | 5.32 | 136 | 10.16 |
| Comparative Example 4 | 5273 | 8736 | 1673 | 3382 | 155 | 150 | 3.87 | 143 | 6.26 |

In Comparative Example 1, the doping ratio of the Ca element was too large, that is, y was too large, the Ca element may form scale-like fine powders on the surface of the single-crystal particle, which may cause a large amount of Ca element to precipitate, failing to block the Na reaction and thus failing to provide the stabilizing effect, and at the same time affecting the capacity utilization.

Comparative Example 2 had no Ca element doped, and its residual alkali content was higher than that of Comparative Example 1. Although its initial capacity was greater than that of Comparative Example 1, with the repeated charge and discharge, its capacity fade and volume expansion rate were greater than those of Comparative Example 1, which indicated that its cycle performance was deteriorated seriously.

In Comparative Example 3, after sintering, the material was directly cooled to room temperature together with the furnace without annealing treatment, and the obtained calcium element was evenly distributed in the surface layer. Although the initial capacity of Comparative Example 3 was greater than that of Example 1, with the repeated charge and discharge, its capacity fade and volume expansion rate were greater than those of Example 1, which indicated that its cycle performance was deteriorated seriously.

Compared with Example 1, the calcium content in Comparative Example 4 was still at a higher level, which is similar to Comparative Example 1 as shown in the results. Because of the large doping ratio of the Ca element, the Ca element may form scale-like fine powders on the surface of the single-crystal particle, thereby affecting the capacity utilization, and the improvement of cycle performance was not as good as Example 1.

Comparing Comparative Example 1 with Comparative Example 4, it can be seen that the residual alkali content of the positive electrode active material prepared in Comparative Example 4 was lower. Although the volume expansion rate of Comparative Example 1 was smaller in early 50 cycles, it was seriously deteriorated in subsequent cycles, and its 100-cycle expansion rate was significantly higher than that of Comparative Example 4, which may be caused by the detachment of the scale-like micro-particles on the surface in Comparative Example 1.

Compared with Comparative Examples 1 to 4, the residual alkali contents of positive electrode active materials prepared in the examples were greatly reduced, and with repeated charge and discharge, the capacity fade and volume expansion rate of the examples were significantly lower than those in Comparative Examples 1 to 4, which indicated that their cycle performance were significantly improved.

The technical features of the above embodiments may be combined arbitrarily. In order to make the description concise, not all possible combinations of the technical features in the above embodiments are described. However, as long as there is no contradiction in the combinations of these technical features, they should be considered as the scope recorded in this specification.

The above examples only express several embodiments of the present application, and their descriptions are relatively specific and detailed, but they cannot be understood as the limiting of the scope of patent application. It should be indicated that variations and improvements may be made by those ordinary skilled in the art, without departing from the concept of the present application, and these variations and improvements belong to the protection scope of the present application. Therefore, the protection scope of the present patent application shall be subject to the appended claims, and the description and drawings may be used to explain the content of the claims.

**Claims**

1. A positive electrode active material, wherein a chemical formula of the positive electrode active material is $Na_xM_{(1-y)}Ca_yO_2$, wherein M comprises a transition metal element, x = 0.8 to 1.1, and $0.005 \leq y \leq 0.015$; and
   wherein more than 95wt% of Ca element is distributed in a surface layer of a single-crystal particle of the positive electrode active material, and a thickness of the surface layer is 1 $\mu$m.

2. The positive electrode active material according to claim 1, wherein M comprises at least one of Fe, Ni, Mn, Co, V, Ti, Cr, Cu and Zn.

3. The positive electrode active material according to claim 2, wherein M comprises at least one of Fe, Ni, Mn, Co, Ti and Zn.

4. The positive electrode active material according to any one of claims 1 to 3, wherein the positive electrode active material meets at least one of the following conditions:

   (1) Dv50 of the single-crystal particle in the positive electrode active material is 6 to 11 $\mu$m;
   (2) the positive electrode active material is O3-phase layered oxide.

5. The positive electrode active material according to any one of claims 1 to 3, wherein the positive electrode active material meets at least one of the following conditions:

   (1) when water is used as a solvent, a residual alkali $CO_3^{2-}$ of the positive electrode active material is <6000 ppm;
   (2) when ethanol is used as a solvent, a residual alkali $OH^-$ of the positive electrode active material is < 900 ppm.

6. A preparation method of a positive electrode active material, comprising the following steps:

   providing a sodium source, a calcium source and an M source according to a chemical formula $Na_xM_{(1-y)}Ca_yO_2$, wherein M comprises a transition metal element, x = 0.8 to 1.1, and $0.005 \leq y \leq 0.015$; and
   mixing the sodium source, the calcium source and the M source, sintering at 850 to 1000°C for 8 to 16 h in an oxygen-containing atmosphere, and then annealing at 500 to 650°C for 7 - 12 h.

7. The preparation method according to claim 6, wherein the preparation method meets at least one of the following conditions:

(1) a heating rate of heating to a temperature of the sintering is 2 to 8°C/min;
(2) before heating to the temperature of the sintering, the preparation method further comprises a step of heating to 500 to 700°C for pre-sintering for 2 to 6 h;
(3) the sintering temperature is lowered to a temperature of the annealing at a rate of 2 to 5°C/min; or the sintering temperature is first lowered and then increased to the temperature of the annealing;
(4) the annealing is performed in an oxygen-containing atmosphere.

8. The preparation method according to claim 6 or 7, wherein the step of mixing the sodium source, the calcium source and the M source comprises:

mixing the sodium source, the calcium source and the M source with a solvent to form a slurry;
drying the slurry to obtain a mixed powder; and
performing subsequent sintering step on the mixed powder.

9. The preparation method according to claim 8, wherein the preparation method meets at least one of the following conditions:

(1) a mass content of a solid in the slurry is 20 to 50%;
(2) Dv50 of the solid in the slurry is controlled to be 0.5 to 1 $\mu$m;
(3) the drying is spray drying, and an inlet temperature of the spray drying is 200 to 270°C, and an outlet temperature thereof is controlled to be 95 to 145°C;
(4) Dv50 of the mixed powder is controlled to be 20 to 30 $\mu$m.

10. A positive electrode sheet, comprising the positive electrode active material according to any one of claims 1 to 5, or the positive electrode active material prepared by the preparation method according to any one of claims 6 to 9.

11. A battery, comprising the positive electrode sheet according to claim 10.

12. An electrical apparatus, comprising the battery according to claim 11.

FIG. 1

FIG. 2

FIG. 3

FIG. 4

FIG. 5

FIG. 6

| Spectrum label | Spectrum 215 | Spectrum 216 | Spectrum 217 | Spectrum 218 | Spectrum 219 |
|---|---|---|---|---|---|
| Na | 21.33 | 27.55 | 24.52 | 24.93 | 32.34 |
| Ca | 1.17 | 11.52 | 11.17 | 4.62 | 8.33 |
| Mn | 38.33 | 36.55 | 37.32 | 38.51 | 32.32 |
| Fe | 20.69 | 13.02 | 14.29 | 17.30 | 14.13 |
| Ni | 18.48 | 11.35 | 12.69 | 14.64 | 12.89 |
| Total | 100 | 100 | 100 | 100 | 100 |

FIG. 7

FIG. 8

FIG. 9

## INTERNATIONAL SEARCH REPORT

| | International application No. |
|---|---|
| | **PCT/CN2024/121225** |

### A. CLASSIFICATION OF SUBJECT MATTER

H01M4/62(2006.01)i; H01M4/505(2010.01)i; H01M4/525(2010.01)i; H01M4/131(2010.01)i; H01M10/054(2010.01)i

According to International Patent Classification (IPC) or to both national classification and IPC

### B. FIELDS SEARCHED

Minimum documentation searched (classification system followed by classification symbols)

IPC/CPC:H01M4/-,H01M10/-

Documentation searched other than minimum documentation to the extent that such documents are included in the fields searched

Electronic data base consulted during the international search (name of data base and, where practicable, search terms used)

CNTXT, ENTXTC, VEN, CJFD, CNKI, STN: 正极, 阴极, 钠 4w 电池, 钙, 残碱, 残钠, 退火, 二次烧结, 二次煅烧, 表层, 表面, 表皮, 外表, 外层, 外面, 外皮, 外周, 梯度, 包覆, positive electrode, cathode, sodium 10w battery, calcium, residual sodium, residual alkali, annealing, secondary calcin+, secondary sinter+, surface, coating, gradient

### C. DOCUMENTS CONSIDERED TO BE RELEVANT

| Category* | Citation of document, with indication, where appropriate, of the relevant passages | Relevant to claim No. |
|---|---|---|
| X | CN 115275134 A (GUIZHOU ZHENHUA E-CHEM INC. et al.) 01 November 2022 (2022-11-01)<br>description, paragraphs 9-40, and embodiment 4 | 1-5, 10-12 |
| X | CN 115939370 A (GUANGDONG KAIJIN NEW ENERGY TECHNOLOGY CO., LTD.) 07 April 2023 (2023-04-07)<br>description, paragraphs 4-71 | 1-5, 10-12 |
| PX | CN 117038995 A (NINGBO RONBAY NEW ENERGY TECHNOLOGY CO., LTD.) 10 November 2023 (2023-11-10)<br>description, paragraphs 3-17 | 1-12 |
| A | CN 115966686 A (NINGBO RONBAY NEW ENERGY TECHNOLOGY CO., LTD.) 14 April 2023 (2023-04-14)<br>entire description | 1-12 |
| A | CN 115548285 A (GUIZHOU ZHENHUA E-CHEM INC. et al.) 30 December 2022 (2022-12-30)<br>entire description | 1-12 |

☑ Further documents are listed in the continuation of Box C.    ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 December 2024** | **31 December 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/121225** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 116031396 A (GUANGDONG KAIJIN NEW ENERGY TECHNOLOGY CO., LTD.) 28 April 2023 (2023-04-28)<br>entire description | 1-12 |
| A | CN 116454280 A (HEFEI GUOXUAN HIGH-TECH POWER ENERGY CO., LTD.) 18 July 2023 (2023-07-18)<br>entire description | 1-12 |
| A | WO 2023137859 A1 (JIANGSU XIANGYING NEW ENERGY TECHNOLOGY CO., LTD.) 27 July 2023 (2023-07-27)<br>entire description | 1-12 |

Form PCT/ISA/210 (second sheet) (July 2022)

INTERNATIONAL SEARCH REPORT
Information on patent family members

International application No.

**PCT/CN2024/121225**

| Patent document cited in search report | | | Publication date (day/month/year) | Patent family member(s) | | | Publication date (day/month/year) |
|---|---|---|---|---|---|---|---|
| CN | 115275134 | A | 01 November 2022 | None | | | |
| CN | 115939370 | A | 07 April 2023 | None | | | |
| CN | 117038995 | A | 10 November 2023 | None | | | |
| CN | 115966686 | A | 14 April 2023 | None | | | |
| CN | 115548285 | A | 30 December 2022 | None | | | |
| CN | 116031396 | A | 28 April 2023 | None | | | |
| CN | 116454280 | A | 18 July 2023 | None | | | |
| WO | 2023137859 | A1 | 27 July 2023 | JP | 2024507080 | A | 16 February 2024 |
| | | | | KR | 20230128339 | A | 04 September 2023 |
| | | | | US | 2024136516 | A1 | 25 April 2024 |
| | | | | US | 2024234711 | A9 | 11 July 2024 |
| | | | | EP | 4266419 | A1 | 25 October 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311296382

- GB 97252007 T